(19) Europäisches Patentamt
European Patent Office
Office européen des brevets

(11) **EP 1 132 226 B1**

(12) **FASCICULE DE BREVET EUROPEEN**

(45) Date de publication et mention
de la délivrance du brevet:
**27.05.2009 Bulletin 2009/22**

(51) Int Cl.:
***B60H 1/00*** *(2006.01)*

(21) Numéro de dépôt: **01105281.8**

(22) Date de dépôt: **05.03.2001**

(54) **Dispositif de détection d'un risque d'embuage d'une vitre de véhicule automobile, et installation comportant un tel dispositif**

Einrichtung zur Erfassung des Beschlagrisikos einer Kraftfahrzeugscheibe und Anlage, die eine derartige Einrichtung enthält

Device for detecting risk of misting of a vehicle window and installation having such a device

(84) Etats contractants désignés:
**DE ES GB IT**

(30) Priorité: **07.03.2000 FR 0002918**

(43) Date de publication de la demande:
**12.09.2001 Bulletin 2001/37**

(73) Titulaire: **VALEO ELECTRONIQUE**
**94042 Créteil (FR)**

(72) Inventeurs:
- **Remond, Bernard**
  **77240 Cesson (FR)**
- **Schwob, Michel**
  **78400 Chatou (FR)**
- **Benalia, Atallah**
  **75014 Paris (FR)**

(74) Mandataire: **Croonenbroek, Thomas Jakob et al**
**Cabinet InnoVinciA**
**11, avenue des Tilleuls**
**74200 Thonon-les-Bains (FR)**

(56) Documents cités:
**DE-A- 3 836 559      DE-A- 19 540 566**
**DE-A- 19 722 577     US-A- 4 852 363**

- **PATENT ABSTRACTS OF JAPAN vol. 010, no. 295 (M-523), 7 octobre 1986 (1986-10-07) & JP 61 110613 A (NIPPON DENSO CO LTD), 28 mai 1986 (1986-05-28)**
- **PATENT ABSTRACTS OF JAPAN vol. 010, no. 118 (M-475), 2 mai 1986 (1986-05-02) & JP 60 248422 A (MATSUSHITA DENKI SANGYO KK), 9 décembre 1985 (1985-12-09)**

**Description**

L'invention concerne un dispositif de détection de présence de buée sur une vitre de véhicule automobile. Une vitre de ce type, telle que le pare-brise du véhicule, s'interpose entre l'extérieur et l'habitacle du véhicule.

Un dispositif pour une telle détection comprend généralement au moins une entrée propre à recevoir une information relative à un état d'embuage du pare-brise, ainsi qu'une sortie reliée à un module de commande d'une installation de ventilation, chauffage et/ou climatisation de l'habitacle du véhicule. Le module de commande émet, le cas échéant, une consigne pour la ventilation du pare-brise, en fonction de l'information précitée.

Des dispositifs de ce type, connus, comportent habituellement une mesure optique de la réflexion d'un faisceau sur une face du pare-brise, côté habitacle, pour détecter un embuage de celui-ci.

Cependant, le faisceau n'éclaire qu'une région localisée du pare-brise et il reste possible qu'une région différente soit embuée. Par ailleurs, il est fréquent que des lumières parasites perturbent de telles mesures optiques.

Dans la demande de brevet européen publiée EP0718165, une solution intéressante est proposée et consiste à prévoir un dispositif muni d'un capteur de point de rosée sur le pare-brise du véhicule, ou encore une sonde de température accompagnée d'une sonde d'humidité. Cependant, de tels capteurs sont onéreux et grèvent le coût de la détection.

La présente invention vient améliorer la situation.

Le document JP 61 110 613, qui est considéré comme l'état de la technique le plus proche, décrit

un dispositif capable de détecter un risque d'embuage d'une vitre au moins d'un véhicule automobile, dans lequel :

- une première et une seconde entrée sont agencées pour recevoir au moins une première et une seconde information, respectivement relatives à une température de la vitre et à une température de rosée dans l'habitacle du véhicule,
- un module de calcul est propre à :

    a) estimer une température de la vitre à partir de la première information au moins,
    b) estimer une température de rosée dans l'habitacle du véhicule à partir de la seconde information au moins, et
    c) estimer une comparaison entre la température de la vitre et la température de rosée pour en déduire un risque de présence de buée sur la vitre, et

- une sortie est propre à être connectée à un module de commande d'une installation de ventilation, chauffage, et/ou climatisation de l'habitacle du véhicule, pour délivrer une consigne relative à un risque de présence de buée.

Dans le but d'améliorer la détection de présence de buée, le dispositif suivant la présente invention se caractérise en ce que la seconde entrée est propre à être connectée à un capteur en température d'une source d'air froid de l'installation. En pratique, cette source d'air froid est formée par un évaporateur d'une boucle de climatisation que comporte l'installation. Dans le bilan hygrométrique précité, il est considéré que l'air sortant de l'évaporateur est sensiblement saturé en humidité et peut donner ainsi accès à la température de rosée. Le module de calcul est alors agencé pour évaluer la température de rosée à partir d'une information relative cette température de la source d'air froid. Initialement, l'air de l'habitacle est considéré de préférence comme saturé en humidité. Une telle réalisation permet avantageusement de réduire les risques d'embuage, quitte à déclencher inutilement une ventilation du pare-brise (ou d'autres vitres du véhicule).

La comparaison entre la température de la vitre et la température de rosée peut être représentée par une différence entre ces deux températures, ou encore par un rapport entre ces températures.

Selon une caractéristique avantageuse de l'invention, le dispositif comporte en outre une mémoire agencée pour stocker des valeurs de température de rosée, associées, selon un diagramme de Mollier, à des valeurs prédéterminées d'humidité. Le module de calcul est alors agencé pour coopérer avec cette mémoire en vue d'estimer la température de rosée sur la base d'un bilan hygrométrique. Cette caractéristique offre l'avantage de se passer d'un capteur de température de rosée, particulièrement onéreux et de fiabilité relative.

Dans une variante, le module de calcul peut être agencé pour estimer la température de rosée en fonction d'une valeur d'humidité, selon une équation prédéterminée. Comme dans la variante précédente, cette valeur d'humidité est préférentiellement déduite d'un bilan hygrométrique.

Dans une forme de réalisation élaborée, le bilan hygrométrique fait intervenir en outre une température initiale dans l'habitacle et un débit d'air ventilé dans l'habitacle. Avantageusement, le dispositif comporte en outre des entrées propres à recevoir des informations relatives à une température dans l'habitacle et à un débit d'air ventilé dans l'habitacle.

Dans une forme de réalisation encore perfectionnée, le dispositif comporte en outre une entrée propre à recevoir une information relative une humidité dégagée par des passagers de l'habitacle, tandis que le bilan hygrométrique fait intervenir en outre une humidité moyenne, dégagée par les passagers. En pratique, il pourra être prévu des indicateurs de présence de passagers, tels que des capteurs dans les sièges de l'habitacle ou des capteurs infrarouges.

Avantageusement, la mémoire précitée comporte une donnée relative à une valeur prédéterminée d'un volume total d'air dans l'habitacle, intervenant dans le bilan hygrométrique précité.

Dans une forme de réalisation selon laquelle l'installation comporte un dispositif de recirculation d'air dans l'habitacle, le dispositif selon l'invention comporte avantageusement une entrée propre à être connectée à un actionneur de réglage de la position d'un volet de recirculation, tandis que le module de calcul est agencé pour distinguer, dans le bilan hygrométrique, une humidité d'air extérieur ventilé dans l'habitacle d'une humidité d'air recirculé dans l'habitacle, suivant la position du volet de recirculation.

Pour ce qui est de l'estimation de la température de la vitre, le dispositif selon l'invention comporte avantageusement une pluralité d'entrées propres à recevoir des informations relatives à une température et une vitesse d'air ventilé, à une température moyenne dans l'habitacle, à la vitesse du véhicule et à une température d'air extérieur.

Dans la demande de brevet français FR-9806831 de la Demanderesse, il est décrit un dispositif capable d'estimer une température d'air ventilé dans une région quelconque de l'habitacle d'un véhicule automobile, seulement à partir d'informations relatives à une température et une vitesse d'air ventilé par des aérateurs de l'habitacle, à une température moyenne dans l'habitacle, à la vitesse du véhicule et à une température d'air extérieur. Plus particulièrement, les température et vitesse d'air ventilé peuvent être déduite d'un contrôle des actionneurs de réglage d'une source d'air chaud et/ou d'une source d'air froid (pour la température) et d'un pulseur (pour la vitesse) que comprend l'installation de ventilation, chauffage et/ou climatisation de l'habitacle du véhicule. Un tel contrôle offre l'économie de capteurs en température et vitesse d'air.

Quant aux informations relatives à une température moyenne dans l'habitacle, à la vitesse du véhicule et à une température d'air extérieur, elles peuvent être déduites de mesures par des capteurs couramment utilisés dans le domaine de l'automobile, et servent déjà, au moins en partie, à établir le bilan hygrométrique précité.

Ainsi, l'utilisation par le dispositif selon l'invention de la technique décrite dans la demande FR-9806831 permet avantageusement d'estimer une température moyenne (spatialement) de la vitre, tout en réalisant l'économie d'une pluralité de capteurs en température, disposés en des régions respectives de la vitre et nécessaires à la détermination de cette température moyenne.

Le module de calcul est alors agencé pour estimer la température de la vitre à partir de la température et de la vitesse d'air ventilé sur la vitre, de la température moyenne dans l'habitacle, de la vitesse du véhicule et de la température d'air extérieur.

Dans une forme de réalisation élaborée, le dispositif comporte en outre une entrée propre à être connectée à un capteur de flux solaire, et le module de calcul est agencé pour estimer la température de la vitre en tenant compte d'un ensoleillement de la vitre.

Selon une caractéristique avantageuse de l'invention, la sortie du dispositif de détection est propre à être connectée à un module de commande d'une installation de ventilation, chauffage et/ou climatisation de l'habitacle du véhicule, pour délivrer une consigne relative à un risque de présence de buée. A ce titre, la présente invention vise aussi une installation de ventilation, chauffage et/ou climatisation de l'habitacle d'un véhicule automobile, comportant un module de commande d'au moins un équipement de l'installation, agencé pour coopérer avec un dispositif de détection du type décrit ci-avant.

Une telle installation comporte avantageusement un dispositif de ventilation de la vitre. Le module de commande est alors agencé pour coopérer avec le dispositif de détection, en vue de délivrer une consigne de ventilation de la vitre lorsque la différence estimée entre la température de la vitre et la température de rosée (associées à des valeurs d'humidité) est inférieure à une première valeur seuil.

Dans une variante plus élaborée, l'installation comporte un dispositif de climatisation de l'habitacle. Le module de commande est alors agencé pour coopérer avec le dispositif de détection, en vue de délivrer une consigne de climatisation de l'habitacle lorsque la différence estimée entre la température de la vitre et la température de rosée est inférieure à une seconde valeur seuil.

Avantageusement, l'installation comporte un dispositif de chauffage de l'air ventilé sur la vitre. Le module de commande est alors agencé pour coopérer avec le dispositif de détection, en vue de délivrer une consigne de chauffage de l'air ventilé sur la vitre lorsque la différence estimée entre la température de la vitre et la température de rosée est inférieure à une troisième valeur seuil.

Avantageusement, l'installation comporte en outre un dispositif de recirculation d'air dans l'habitacle. Le module de commande est alors agencé pour coopérer avec le dispositif de détection, en vue de délivrer une consigne d'admission d'air extérieur dans l'habitacle lorsque la différence estimée entre la température de la vitre et la température de rosée est inférieure à une quatrième valeur seuil.

Dans une forme de réalisation préférée, l'installation comporte une boucle de climatisation comprenant un évaporateur, ainsi qu'un capteur de température, disposé à proximité de l'évaporateur et en aval de celui-ci dans le sens de parcours d'un flux d'air destiné à être ventilé dans l'habitacle. Ce capteur est propre à être connecté à la seconde entrée précitée du dispositif de détection.

Ainsi, le dispositif de détection selon l'invention ne nécessite avantageusement pas de capteurs supplémentaires par rapport à une installation classique de chauffage, ventilation et/ou climatisation.

D'autres caractéristiques et avantages de l'invention apparaîtront à l'examen de la description détaillée ci-après, et des dessins annexés sur lesquels :

- la figure 1 représente schématiquement une installation de ventilation, chauffage et climatisation de l'habitacle HAB d'un véhicule automobile, munie d'un dispositif de détection d'un risque d'embuage du pare-brise PB de ce véhicule, selon l'invention ;

- la figure 2 représente schématiquement la structure d'un dispositif selon l'invention, avec des entrées pour recevoir des informations relatives à des paramètres thermiques choisis, et une sortie pour délivrer une consigne représentative de la différence entre la température de rosée dans l'habitacle et une température du pare-brise PB ;

- la figure 3 représente une diagramme de MOLLIER, donnant l'humidité absolue de l'air à une atmosphère, en fonction de la température ;

- la figure 4 représente un tel diagramme de MOLLIER appliqué à l'estimation de la température de rosée dans l'habitacle du véhicule ;

- la figure 5 représente schématiquement les échanges thermiques entre les différents flux d'air reçus par le pare-brise PB du véhicule ; et

- la figure 6 représente un diagramme de MOLLIER, sur lequel figure un paramètre R quantitativement représentatif d'un risque d'embuage du pare-brise PB du véhicule.

Les dessins annexés et la description détaillée ci-après contiennent, pour l'essentiel, des éléments de caractère certain. Ils pourront non seulement servir à mieux faire comprendre la présente invention, mais aussi contribuer à sa définition, le cas échéant.

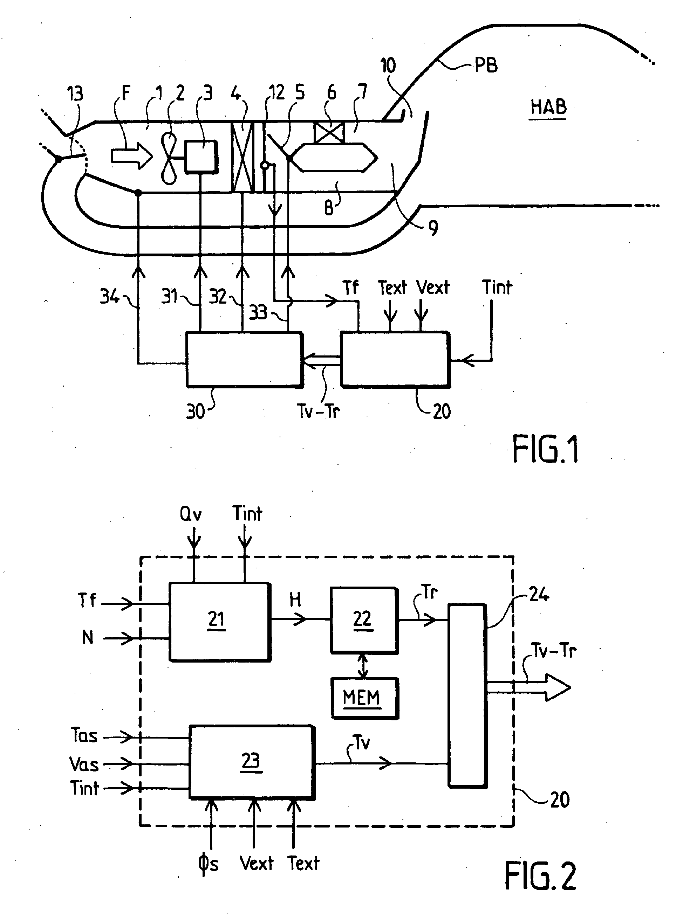

On se réfère tout d'abord à la figure 1 pour décrire une installation de ventilation, chauffage et climatisation de l'habitacle HAB d'un véhicule automobile, comprenant un dispositif de détection, selon l'invention, d'un risque de présence de buée sur une vitre du véhicule, en particulier sur le pare-brise PB.

Cette installation comprend un pulseur muni d'un moteur 3 propre à faire tourner les pales d'une hélice 2, en vue de produire un flux d'air F dans un conduit principal 1, lequel loge l'évaporateur 4 d'une boucle de climatisation (détendeur, évaporateur, compresseur, condenseur) que comporte l'installation.

Dans l'exemple décrit, le conduit principal 1 se sépare, en aval de l'évaporateur 4, en une branche 8 d'air froid et une branche 7 d'air chaud qui se rejoignent dans une chambre de mixage 9, communiquant avec des conduits 10 d'aération de l'habitacle. La branche d'air chaud 7 comprend un radiateur de chauffage 6, tandis qu'il est prévu un volet de mixage 5, en amont des branches d'air chaud 7 et d'air froid 8, pour répartir un flux d'air dans l'une et/ou l'autre de ces branches, en vue d'obtenir dans la chambre de mixage 9 un flux d'air de température ajustée en fonction de la position du volet de mixage 5.

Dans une variante de l'installation décrite, il peut être prévu, dans le conduit principal 1, un radiateur de chauffage muni d'une vanne pour le contrôle du débit de fluide d'échange thermique qui le traverse (par exemple de l'eau, dans le cas des radiateurs de chauffage à eau). Cette vanne peut être commandée par le module 30, en vue d'ajuster la température du flux d'air en sortie de ce radiateur de chauffage et, de là, la température du flux d'air ventilé dans l'habitacle. Un tel radiateur de chauffage à vanne de contrôle remplacerait le volet de mixage 5, la branche d'air chaud 7 munie de son radiateur 6, la branche d'air froid 8, ainsi que la chambre de mixage 9.

L'installation comporte en particulier un conduit 10 d'aération du pare-brise PB du véhicule, pour son désembuage.

Un dispositif de recirculation comprend en outre un volet de recirculation 13 pour admettre de l'air extérieur ou de l'air recirculé dans le conduit principal 1. En pratique, lorsque le volet de recirculation 13 admet de l'air extérieur, l'habitacle du véhicule est ventilé en air extérieur. En revanche, lorsque le volet de recirculation est dans une position suivant laquelle le conduit principal 1 n'admet que de l'air recirculé, de l'air recirculé est ventilé dans l'habitacle du véhicule.

L'installation comprend un module de commande 30 des différents équipements qu'elle comporte. Ainsi, la liaison 31 permet d'ajuster le régime du moteur 3 que comporte le pulseur de l'installation, en vue de régler la vitesse du flux d'air ventilé dans l'habitacle. La liaison 32 permet de modifier le débit de fluide frigorigène qui circule dans la boucle de climatisation, en vue d'ajuster la diminution de température que subit le flux d'air F, lorsqu'il traverse l'évaporateur 4. La liaison 33 permet de modifier la position du volet de mixage 5, en vue d'ajuster la température du flux d'air dans la chambre de mixage 9. La liaison 34 permet de contrôler une admission d'air extérieur ou d'air recirculé dans l'habitacle.

L'installation comporte un dispositif de détection d'un risque de présence de buée sur le pare-brise PB du véhicule automobile. Ce dispositif est agencé pour estimer, selon l'invention, une différence entre la température moyenne du pare-brise $T_v$ (moyenne dans sa superficie) et la température de rosée dans l'habitacle $T_r$. A cet effet, le dispositif de détection 20 comprend une pluralité d'entrées pour recevoir des données relatives à des paramètres tels que la température extérieure au véhicule $T_{ext}$, la vitesse du véhicule $V_{ext}$, la température $T_f$ du flux d'air en sortie de l'évaporateur 4 et une température moyenne dans l'habitacle $T_{int}$. Un module de calcul que comprend le dispositif 20 est agencé alors pour estimer, dans l'exemple décrit, la différence $T_v$ - $T_r$.

En se référant à la figure 1, le flux d'air que produit le pulseur de l'installation traverse, pratiquement en totalité, l'évaporateur 4 de la boucle de climatisation. L'échange de chaleur au niveau de l'évaporateur 4 tend ainsi à saturer le flux d'air F en vapeur d'eau.

Dans l'exemple décrit, il est ainsi estimé que le flux d'air F, en sortie de l'évaporateur 4, est saturé en humidité. La mesure de sa température peut donner ainsi accès à la température de rosée de l'air qui sera ventilé dans l'habitacle. A cet effet, il est prévu un capteur 12 en température pour mesurer la température $T_f$ juste en aval de l'évaporateur 4.

En se référant à la figure 2, le dispositif de détection 20 comprend un premier jeu d'entrée pour recevoir respectivement des informations relatives à :

- la température $T_f$ de la source d'air froid 4 (température du flux d'air F en sortie de l'évaporateur) ;

- le débit d'air ventilé dans l'habitacle $q_v$ ;

- la température initiale, moyenne, dans l'habitacle $T_{int}$ ; et

- le cas échéant, le nombre de passagers N à bord de l'habitacle.

Pour l'estimation du débit d'air ventilé dans l'habitacle $q_v$, il peut être prévu une communication entre le dispositif 20 et le pulseur de l'installation, sous la forme d'une interrogation-réponse. Dans ce cas, le module 20 émet un signal d'interrogation vers le moteur 3 du pulseur, ou encore vers le module de commande 30, et reçoit, en retour, une information relative au régime du pulseur, et, de là, une estimation du débit d'air ventilé $q_{v, en}$ prenant en compte notamment la vitesse du véhicule.

La température $T_{int}$ moyenne dans l'habitacle peut être estimée à partir d'un capteur dans l'habitacle, connu en soi.

Dans le cas où une information relative au nombre de passagers est utilisée, il peut être prévu des capteurs de présence de passagers dans l'habitacle du véhicule. Ces capteurs peuvent être disposés dans les sièges de l'habitacle (capteurs de poids), ou des capteurs infrarouges, ou encore à partir d'informations tirées de l'ouverture ou de la fermeture des portes du véhicule.

Il est à noter que ces différentes informations peuvent être obtenues par des capteurs directs. C'est ainsi que le débit d'air ventilé $q_v$ peut être aussi mesuré à partir de capteurs de type anémomètres, placés à la sortie des bouches d'aération de l'habitacle et/ou dans l'appareil de climatisation.

De façon générale, l'humidité à l'intérieur de l'habitacle est gérée par une équation de bilan d'humidité, sous une forme différentielle :

$$\rho_{air} \, V_{air} \, dH/dt = \rho_{air} \, (q_v \, H_v - q_v \, H) + N\Gamma \qquad\qquad (1)$$

où :

- $q_v$ (m$^3$/s) est le débit d'air ventilé dans l'habitacle,
- $\rho_{air}$ (kg/m$^3$) est la masse volumique de l'air,
- H est l'humidité absolue de l'air dans l'habitacle (kg d'eau/kg d'air sec) ;
- Hv est l'humidité absolue apportée par la ventilation d'air dans l'habitacle ;
- $V_{air}$ (m$^3$) est le volume de l'air à l'intérieur de l'habitacle, correspondant à une valeur prédéterminée, stockée dans la mémoire MEM ; et
- $\Gamma$ (kg d'eau/s/personne) est l'humidité absolue générée par seconde, en moyenne par un passager dans l'habitacle.

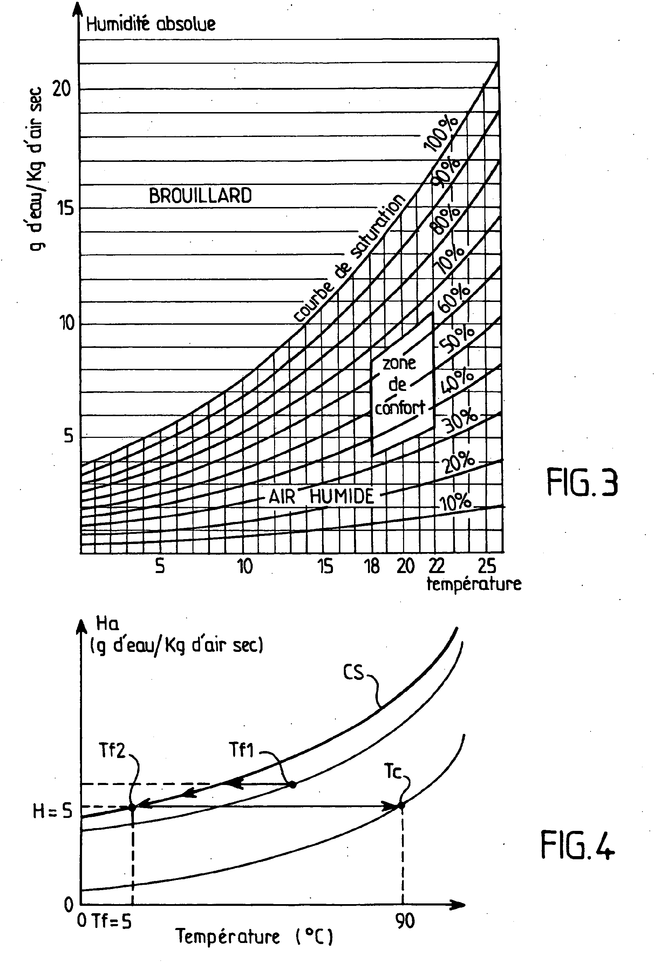

Pour résoudre l'équation différentielle ci-dessus, il est nécessaire d'obtenir une estimation de l'humidité initiale dans l'habitacle. Le module de calcul du dispositif de détection est, dans l'exemple décrit, agencé pour considérer qu'initialement, l'air de l'habitacle est saturé en humidité. Ainsi, à partir de la température $T_{int}$ moyenne dans l'habitacle, initiale, et en se servant du diagramme de MOLLIER représenté sur la figure 3, on remonte à une valeur initiale de l'humidité dans l'habitacle. Pour cela, on prend un point de la courbe de saturation CS (100 %) dont l'abscisse correspond à la température intérieure, initiale, dans l'habitacle et l'on se reporte à l'ordonnée correspondante sur cette courbe de saturation. Par exemple, si la température $T_{int}$ est voisine de 20°C, l'humidité initiale dans l'habitacle est considérée comme voisine de 15g d'eau/kg d'air sec.

Avantageusement, le dispositif de détection selon l'invention comprend une mémoire MEM (figure 2) dans laquelle sont stockées les instructions de calculs relatifs à l'équation (1). Elle comporte en outre des données de correspondances, selon un diagramme de MOLLIER, entre température et humidité, pour une pression de l'air voisine de 1 atmosphère. Elle peut en variante contenir des instructions de calculs donnant, à partir d'une équation prédéterminée, la température en fonction de l'humidité.

Pour estimer l'humidité absolue générée par la ventilation d'air dans l'habitacle, il peut être prévu directement un capteur, de type hygromètre, placé à la sortie d'une bouche d'aération de l'appareil. Dans une forme de réalisation préférée de la présente invention, cette humidité absolue $H_v$ est estimée par un modèle utilisant des informations relatives au débit d'air ventilé $q_v$ et à la température de la source froide $T_f$ (en sortie de l'évaporateur 4).

En se référant à la figure 4, le flux d'air F généré par le pulseur est de température initiale $T_{f1}$. En traversant l'évaporateur 4, il se sature en humidité et sa température diminue jusqu'à la température de sortie $T_{f2}$ (correspondant à la température $T_f$ que mesure le capteur 12). Dans le cas où une portion du flux d'air F traverse la branche d'air chaud et le radiateur de chauffage 6, sa température augmente mais son humidité absolue ne change sensiblement pas.

On considère ainsi, selon une approximation judicieuse, que la température $T_f$ en sortie de l'évaporateur 4, correspond à la température de rosée de l'air ventilé dans l'habitacle. En utilisant les correspondances données par le diagramme de MOLLIER (courbe de saturation CS), on accède ainsi à l'humidité de l'air ventilé dans l'habitacle $H_v$ et l'équation différentielle (1) peut être intégrée.

Dans le cas où l'installation comporte un dispositif de recirculation d'air dans l'habitacle, le dispositif de détection de risque de formation de buée comprend une entrée supplémentaire pour recevoir une information relative à la position d'un volet de recirculation. Ainsi, si l'air ventilé dans l'habitacle est essentiellement de l'air recirculé, il est estimé que l'humidité de l'air ventilé initialement dans l'habitacle correspond à l'humidité initiale dans l'habitacle (donnée par la température moyenne $T_{int}$), en particulier lorsque la climatisation est arrêtée. En revanche, lorsque la position du volet de recirculation est telle que l'air ventilé dans l'habitacle est principalement de l'air extérieur, l'humidité de l'air ventilé dans l'habitacle est estimée comme étant de l'humidité de l'air extérieur (donnée par la température $T_f$ en sortie de la source froide), en particulier lorsque la climatisation est arrêtée.

En se référant à la figure 2, un premier module de calcul 21 estime l'humidité H dans l'habitacle, à partir d'un bilan hygrométrique faisant intervenir l'équation différentielle (1). Dans ce bilan hygrométrique, l'humidité initiale de l'habitacle est donnée par la température $T_{int}$. Le débit d'air ventilé $q_v$ est donné par une information relative au régime du moteur que comporte le pulseur de l'installation et par la vitesse du véhicule. La température de la source froide $T_f$ donne accès à l'humidité de l'air ventilé dans l'habitacle. Si l'humidité dégagée par les passagers est prise en compte, le dispositif 20 comprend une entrée pour déterminer le nombre de passagers présents dans l'habitacle et, de là, en déduire une estimation d'une humidité moyenne dégagée par les passagers de l'habitacle (NΓ).

Ainsi, à partir de l'humidité H estimée dans l'habitacle, le dispositif 20 est apte à estimer une température de rosée dans l'habitacle, en utilisant la mémoire MEM dans laquelle sont stockées notamment les correspondances entre température de rosée et humidité, un second module de calcul 22 coopérant avec cette mémoire MEM.

Le dispositif 20 comporte, dans l'exemple décrit, un troisième module de calcul 23 qui reçoit des informations relatives à une température d'air soufflé dans l'habitacle $T_{as}$, une vitesse d'air soufflé $V_{as}$, la température moyenne dans l'habitacle $T_{int}$, la température d'air extérieur $T_{ext}$, la vitesse du véhicule $V_{ext}$ et, le cas échéant, une information relative à un flux solaire que reçoit le pare-brise du véhicule. A partir de l'ensemble de ces informations, le second module de calcul 23 est agencé pour estimer une température moyenne du pare-brise du véhicule $T_v$.

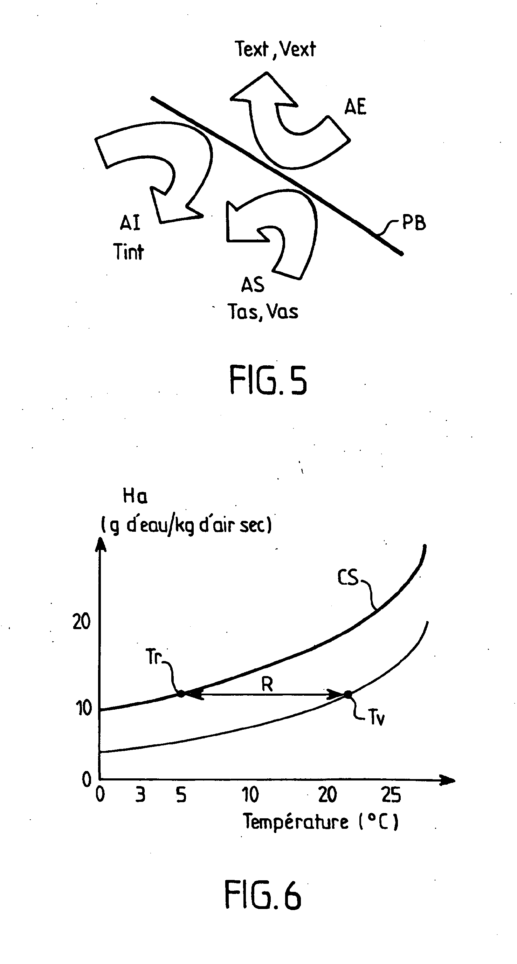

En se référant à la figure 5, cette vitre $P_B$ du véhicule est balayée par les flux d'air suivants :

- un flux d'air extérieur AE, de température $T_{ext}$ et de vitesse $V_{ext}$ ;

- un flux d'air soufflé AS, de température $T_{as}$ et de vitesse $V_{as}$ ; et

- un flux d'air intérieur AI, de température $T_{int}$ et de vitesse pouvant être négligée.

Dans la forme de réalisation préférée décrite ici, la température du pare-brise est estimée à partir d'un modèle aéraulique de jet, combiné à un modèle thermique.

Le bilan thermique est régi par l'équation différentielle suivante :

$$M_v \; C_v \; dT_v/dt \; = \; h_{int}(T_{int}-T_v) \; + \; h_{ext}(T_{ext}-T_v) \qquad\qquad (2)$$

où :

- Mv est la masse du pare-brise ;
- Cv est la capacité calorifique du pare-brise ;
- Tv est sa température ;
- $h_{int}$, le coefficient de convection entre le pare-brise et l'air intérieur ; et
- $h_{ext}$, le coefficient de convection entre le pare-brise et l'air extérieur.

Ces deux coefficients de convection $h_{int}$ et $h_{ext}$ sont des fonctions connues de la température intérieure, de la température extérieure, de la température du pare-brise, du débit d'air ventilé $q_v$ et de la vitesse de l'air extérieur (ou la vitesse du véhicule automobile, en première approximation).

L'intégration de l'équation différentielle relative au bilan thermique du pare-brise, à partir des paramètres $T_{int}$, $T_{ext}$, $T_{as}$, $V_{ext}$, et $V_{as}$, est connue par la demande FR-98 06831 de la demanderesse. On remonte ainsi à la température moyenne du pare-brise (moyenne en surface).

Ainsi, pour l'estimation de la température du pare-brise,

- la vitesse d'air soufflé $V_{as}$ peut être déduite du régime du moteur du pulseur et de la position des volets de distribution d'air dans l'habitacle et de la vitesse du véhicule (en première approximation, ce paramètre correspond au débit d'air ventilé $q_v$) ;

- la température moyenne dans l'habitacle $T_{int}$ peut être estimée à partir d'un modèle utilisant un bilan thermique, ou encore à partir d'un capteur de température moyenne dans l'habitacle ;

- la température extérieure $T_{ext}$ peut être mesurée à partir d'un capteur à l'extérieur du véhicule, de façon connue en soi ;

- la vitesse d'air extérieur $V_{ext}$ est déduite de la vitesse du véhicule ; et

- la température d'air soufflé $T_{as}$ peut être déduite d'un modèle aéraulique et thermique de l'appareil, ou encore mesurée à partir d'un capteur dans une bouche d'aération de l'habitacle du véhicule.

Le flux solaire $\Phi_S$ peut être pris en compte dans le bilan thermique précité, en tant qu'apport de chaleur, et peut être estimé à partir d'un capteur de flux solaire, tel qu'une photodiode ou autre, disposée sur la planche de bord du véhicule par exemple.

A partir de la température du pare-brise $T_v$ et de la température de rosée estimée dans l'habitacle $T_r$, le dispositif selon l'invention évalue la différence $T_v$-$T_r$. Cette différence de température est quantitativement représentative d'un risque R (figure 6) d'embuage du pare-brise du véhicule. Ainsi, si la température du pare-brise $T_v$ est inférieure ou voisine de la température de rosée $T_r$, le risque d'embuage est important et il convient de déclencher une ventilation d'air chaud et sec sur le pare-brise. En revanche, lorsque la température $T_v$ du pare-brise est nettement supérieure à la température de rosée $T_r$, le risque d'embuage est faible et une telle ventilation du pare-brise n'est pas nécessaire.

Dans l'exemple décrit, le dispositif selon l'invention comporte une sortie connectée au module de commande 30 de l'installation de ventilation, chauffage et climatisation de l'habitacle du véhicule, par laquelle il délivre une consigne relative au risque de présence de buée sur le pare-brise (en sortie du module 24 propre à estimer la différence des température $T_v$-$T_r$). Si cette différence de température est :

- supérieure à 5°C (première valeur seuil précitée), le module de commande n'émet aucune nouvelle consigne relative à une aération du pare-brise ;

- comprise entre 3°C (correspondant, dans l'exemple décrit, à la seconde valeur seuil précitée) et 5°C, le module de commande 30 est agencé pour émettre une consigne vers le pulseur pour déclencher une ventilation du pare-brise ;

- voisine de 3°C, le module de commande est agencé pour déclencher en outre une climatisation dans l'habitacle (commande de la boucle de climatisation par la liaison 32) ;

- comprise entre 2°C (correspondant à la quatrième valeur seuil précitée) et 3°C, le module de commande déclenche en outre une admission d'air extérieur dans l'habitacle si l'installation comporte un dispositif de recirculation d'air dans l'habitacle ;

- inférieure à 0°C (correspondant à la troisième valeur seuil précitée), le module de commande déclenche en outre une modification de la position du volet de mixage pour augmenter la température du flux d'air ventilé dans l'habitacle.

Il peut être prévu que la détection du risque de présence de buée soit effectuée au démarrage du véhicule et, le cas échéant, à des instants séparés par une durée choisie, lorsque le véhicule est en service.

Bien entendu, la présente invention ne se limite pas à la forme de réalisation décrite ci-avant à titre d'exemple. Elle s'étend à d'autres variantes.

Ainsi, on comprendra que les différentes valeurs seuils en température de la différence $T_v$-$T_r$ sont données ci-avant à titre d'exemple et peuvent admettre des variantes. Par exemple, dans le cas où l'installation ne comporte pas de dispositif de recirculation d'air dans l'habitacle, il peut être prévu de chauffer le flux d'air ventilé dans l'habitacle à partir d'une différence de température voisine de 2°C.

Dans l'exemple décrit ci-avant, le dispositif selon l'invention coopère avec un module de commande de l'installation, de manière à déclencher de façon automatique la ventilation du pare-brise si un risque est détecté. Dans une variante moins élaborée, il peut être prévu l'émission d'un signal, par exemple sur la planche de bord du véhicule, pour attirer l'attention d'un passager de l'habitacle, lequel peut alors décider de déclencher manuellement une ventilation de la vitre, le cas échéant.

Dans l'exemple décrit ci-avant, il est fait économie d'un capteur de température de rosée dans l'habitacle du véhicule, généralement onéreux. Bien entendu, un tel capteur peut être utilisé pour mesurer directement la température de rosée, dans une variante.

Dans ce cas, une mémoire contenant des correspondances entre humidités, d'une part, et températures, d'autre part, selon un diagramme de MOLLIER, n'est pas nécessaire dans le dispositif de détection.

De même, dans l'exemple de réalisation décrit ci-avant, il est fait économie d'un réseau de capteurs de température montés sur le pare-brise du véhicule pour en estimer une température moyenne. Dans une variante du dispositif selon l'invention, il peut être prévu un tel réseau de capteurs en température (par exemple agencés à des pas réguliers suivant une direction horizontale et suivant une direction verticale).

Dans l'exemple ci-avant, il a été considéré que l'air contenu initialement dans l'habitacle est saturé en humidité. En variante, il peut être envisagé un dispositif permettant une détermination plus précise de cette humidité par exemple en utilisant la température externe $T_{ext}$.

La structure du dispositif 20 de détection de risque d'embuage, représentée sur la figure 2, est donnée à titre d'exemple. En pratique, elle comporte une mémoire MEM pour stocker les correspondances tirées d'un diagramme de MOLLIER, précitées, ainsi qu'un module de calcul, typiquement un microprocesseur qui coopère avec une mémoire associée, pour effectuer les estimations en températures et en différences de températures décrites ci-avant. Ainsi, un tel module de calcul regroupe les modules 21, 22, 23 et 24 décrits ci-avant. Dans une forme de réalisation avantageuse, un ordinateur de bord comprend un tel microprocesseur, ainsi qu'une mémoire morte pour stocker les correspondances données par le diagramme de MOLLIER et une mémoire vive pour effectuer les traitements nécessaires à l'obtention de la différence de température $T_v$-$T_r$.

En particulier, la mémoire MEM comprend en outre un programme d'ordinateur comprenant des lignes d'instructions pour :

- définir des variables relatives aux paramètres $T_{int}$, $T_{ext}$, $V_{ext}$, $q_v$, $T_f$, etc,
- lier ces variables selon les équations différentielles (1) et (2), et
- résoudre ces équations, tandis qu'une instruction de fin donne la différence de température $T_v$-$T_r$ (ou encore le rapport $T_v/T_r$).

A ce titre, un tel programme d'ordinateur se présente comme un moyen avantageux pour mettre en oeuvre l'invention. Ce programme peut être stocké en mémoire d'un ordinateur de bord d'un véhicule automobile, ou encore sur un support différent (disquette, CDRom, etc) en vue d'un stockage ultérieur dans une mémoire d'un ordinateur de bord du type précité.

**Revendications**

1. Dispositif de détection d'un risque de présence de buée sur une vitre de véhicule automobile, ladite vitre (PB) s'interposant entre l'extérieur et l'habitacle (HAB) du véhicule, comportait

- au moins une première et une seconde entrée pour recevoir au moins une première et une seconde information, respectivement relatives à une température de la vitre (Tv) et à une température de rosée (Tr) dans l'habitacle du véhicule,

- un module de calcul (21,22,23,24) propre à :

a) estimer une température de la vitre (Tv) à partir de la première information au moins,

b) estimer une température de rosée (Tr) dans l'habitacle (HAB) du véhicule à partir de la seconde information au moins, et

c) estimer une comparaison (Tv-Tr, Tv/Tr) entre la température de la vitre et la température de rosée pour en déduire un risque de présence de buée sur la vitre,

- ainsi qu'une sortie propre à être connectée à un module de commande (30) d'une installation de ventilation, chauffage et/ ou climatisation de l'habitacle du véhicule, pour délivrer une consigne relative à un risque (R) de présence de buée,

**caractérisé en ce que** la seconde entrée est propre à être connectée à un capteur en température (12) d'une source d'air froid (4) de l'installation, et **en ce que** le module de calcul (21,22) est agencé pour évaluer la température de rosée de l'habitacle à partir d'une information représentative de la température (Tf) de la source d'air froid, tandis que l'air de l'habitacle est considéré initialement comme saturé en humidité.

**2.** Dispositif selon la revendication 1, **caractérisé en ce qu'**il comporte en outre une mémoire (MEM) agencée pour stocker des valeurs de température de rosée (Tr), associées, selon un diagramme de Mollier, à des valeurs prédéterminées d'humidité (H), et **en ce que** le module de calcul (21,22) est agencé pour coopérer avec ladite mémoire (MEM) en vue d'estimer la température de rosée sur la base d'un bilan hygrométrique.

**3.** Dispositif selon l'une des revendications 1 et 2, **caractérisé en ce qu'**il comporte en outre une mémoire (MEM) agencée pour stocker des instructions de calculs aptes à donner, selon une équation prédéterminée, des valeurs de température de rosée (Tr) en fonction de valeurs prédéterminées d'humidité (H), et **en ce que** le module de calcul (21,22) est agencé pour coopérer avec ladite mémoire (MEM) en vue d'estimer la température de rosée sur la base d'un bilan hygrométrique.

**4.** Dispositif selon l'une quelconque des revendications 1 à 3, **caractérisé en ce qu'**il comporte en outre des entrées propres à recevoir des informations relatives à une température dans l'habitacle (Tint) et à un débit (qv) d'air ventilé dans l'habitacle, tandis que le bilan hygrométrique fait intervenir en outre la température de l'habitacle et ledit débit.

**5.** Dispositif selon la revendication 4, **caractérisé en ce qu'**il comporte en outre une entrée propre à recevoir une information relative une humidité (N GAMMA) dégagée par des passagers de l'habitacle, tandis que le bilan hygrométrique fait intervenir en outre l'humidité dégagée par les passagers.

**6.** Dispositif selon l'une des revendications 2 à 5, **caractérisé en ce que** ladite mémoire (MEM) comporte une donnée prédéterminée, relative à un volume d'air (Vair) dans l'habitacle.

**7.** Dispositif selon l'une des revendications 2 à 6, **caractérisé en ce qu'**il comporte une entrée propre à être connectée à un actionneur de réglage de la position d'un volet (13) de recirculation d'air dans l'habitacle, que comporte l'installation, tandis que le module de calcul (21) est agencé pour distinguer, dans le bilan hygrométrique, une humidité d'air extérieur ventilé dans l'habitacle d'une humidité d'air recirculé dans l'habitacle, suivant la position du volet de recirculation (13).

**8.** Dispositif selon l'une des revendications précédentes, **caractérisé en ce qu'**il comporte une pluralité d'entrées propres à recevoir des informations relatives à une température (Tas) et une vitesse (Vas) d'air ventilé, à une température moyenne (Tint) dans l'habitacle, à la vitesse du véhicule (Vext) et à une température d'air extérieur (Text), et **en ce que** le module de calcul (23) est agencé pour estimer la température de la vitre (Tv) à partir de la température et de la vitesse d'air ventilé sur la vitre, de la température moyenne dans l'habitacle, de la vitesse du véhicule et de la température d'air extérieur.

**9.** Dispositif selon la revendication 8, **caractérisé en ce qu'**il comporte en outre une entrée (PHI S) propre à être connectée à un capteur de flux solaire, et **en ce que** le module de calcul est agencé pour estimer la température de la vitre en tenant compte d'un ensoleillement de ladite vitre.

**10.** Installation de ventilation, chauffage et/ou climatisation de l'habitacle d'un véhicule automobile, **caractérisée en ce qu'**elle comporte un module de commande (30) d'au moins un équipement (2,3;4;5,6;13) de l'installation, et un dispositif de détection (20) d'un risque de présence de buée sur une vitre (PB) du véhicule, selon l'une des revendications précédentes, ledit module de commande (30) étant agencé pour coopérer avec ledit module de détection (20).

**11.** Installation selon la revendication 10, **caractérisée en ce qu'**elle comporte un dispositif de ventilation (2,3) de la vitre, et **en ce que** le module de commande (30) est agencé pour coopérer avec le dispositif de détection (20), en vue de délivrer une consigne de ventilation de la vitre lorsque la comparaison estimée (Tv-Tr, Tv/Tr) entre la température de la vitre et la température de rosée est inférieure à une première valeur seuil.

**12.** Installation selon la revendication 11, **caractérisée en ce qu'**elle comporte un dispositif de climatisation (4) de l'habitacle, et **en ce que** le module de commande (30) est agencé pour coopérer avec le dispositif de détection (20), en vue de délivrer une consigne de climatisation de l'habitacle lorsque la comparaison estimée (Tv-Tr, Tv/Tr) entre la température de la vitre et la température de rosée est inférieure à une seconde valeur seuil.

**13.** Installation selon l'une des revendications 11 et 12, **caractérisée en ce qu'**elle comporte un dispositif de chauffage (5,6) de l'air ventilé sur la vitre (PB), et **en ce que** le module de commande (30) est agencé pour coopérer avec le dispositif de détection (20), en vue de délivrer une consigne de chauffage de l'air ventilé sur la vitre lorsque la comparaison estimée (Tv-Tr, Tv/Tr) entre la température de la vitre et la température de rosée est inférieure à une troisième valeur seuil.

**14.** Installation selon l'une des revendications 11 à 13, **caractérisée en ce qu'**elle comporte un dispositif de recirculation d'air dans l'habitacle (13), et **en ce que** le module de commande est agencé pour coopérer avec le dispositif de détection, en vue de délivrer une consigne d'admission d'air extérieur dans l'habitacle lorsque la comparaison estimée entre la température de la vitre et la température de rosée est inférieure à une quatrième valeur seuil.

**15.** Installation selon l'une des revendications 10 à 14, **caractérisée en ce qu'**elle comporte une boucle de climatisation comprenant un évaporateur (4), ainsi qu'un capteur de température (12), disposé à proximité de l'évaporateur et en aval de celui-ci (4) dans le sens de parcours d'un flux d'air (F) destiné à être ventilé dans l'habitacle, et **en ce que** ledit capteur est propre à être connecté à la seconde entrée (Tf) du dispositif de détection (20).

**Claims**

**1.** Device for detecting a risk of the presence of misting on a motor vehicle window, the said window (PB) being interposed between the exterior and the cabin (HAB) of the vehicle, and comprising:

- at least one first and one second input to receive at least one first and one second information item, these respectively relating to a temperature of the window (Tv) and to a dew point (Tr) in the cabin of the vehicle,
- a calculation module (21, 22, 23, 24) capable of:

a) estimating a temperature of the window (Tv) from the first information item at least,
b) estimating a dew point (Tr) in the cabin (HAB) of the vehicle from the second information item at least, and
c) estimating the comparison (Tv-Tr, Tv/Tr) between the temperature of the window and the dew point in order therefrom to deduce a risk that there will be misting on the window,

- and an output capable of being connected to a control module (30) that controls a vehicle cabin heating, ventilation and/or air conditioning installation, in order to deliver an instruction relating to a risk (R) that misting will be present, **characterized in that** the second input is capable of being connected to a temperature sensor (12) of a cold air source (4) of the installation, and **in that** the calculation module (21, 22) is designed to evaluate the dew point of the cabin from an information item representative of the temperature (Tf) of the cold air source, while the cabin air is considered initially to be saturated with moisture.

**2.** Device according to Claim 1, **characterized in that** it further comprises a memory (MEM) designed to store dew point values (Tr) associated, according to a Mollier diagram, with predetermined values of humidity (H) and **in that** the calculation module (21, 22) is designed to collaborate with the said memory (MEM) for the purposes of estimating the dew point on the basis of a hygrometric balance.

3. Device according to one of Claims 1 and 2, **characterized in that** it further comprises a memory (MEM) designed to store calculation instructions capable, according to a predetermined equation, of yielding dew point values (Tr) as a function of predetermined humidity values (H), and **in that** the calculation module (21, 22) is designed to collaborate with the said memory (MEM) for the purposes of estimating the dew point on the basis of a hygrometric balance.

4. Device according to any one of Claims 1 to 3, **characterized in that** it further comprises inputs capable of receiving information items relating to a temperature in the cabin (Tint) and to a flow rate (qv) of air blown into the cabin, while the hygrometric balance also involves the cabin temperature and the said flow rate.

5. Device according to Claim 4, **characterized in that** it further comprises an input capable of receiving information items relating to a humidity (N GAMMA) given off by the passengers in the cabin, while the hygrometric balance also involves the humidity given off by the passengers.

6. Device according to one of Claims 2 to 5, **characterized in that** the said memory (MEM) comprises a predetermined data item relating to a volume of air (Vair) in the cabin.

7. Device according to one of Claims 2 to 6, **characterized in that** it comprises an input capable of being connected to an actuator that adjusts the position of a flap (13) for the recirculation of air in the cabin, that the installation comprises, while the calculation module (21) is designed to make a distinction, in the hygrometric balance, between the humidity of exterior air blown into the cabin and the humidity of air being recirculated in the cabin, according to the position of the recirculation flap (13).

8. Device according to one of the preceding claims, **characterized in that** it comprises a plurality of inputs capable of receiving information items relating to a temperature (Tas) and a speed (Vas) of blown air, to a mean temperature (Tint) in the cabin, to the speed of the vehicle (Vext) and to an external air temperature (Text), and **in that** the calculation module (23) is designed to estimate the temperature of the window (Tv) from the temperature and speed of the air blown onto the window, from the mean temperature in the cabin, from the speed of the vehicle and from the temperature of the external air.

9. Device according to Claim 8, **characterized in that** it further comprises an input (PHI S) capable of being connected to a solar flux sensor, and **in that** the calculation module is designed to estimate the temperature of the window taking insolation of the said window into consideration.

10. Motor vehicle cabin heating, ventilation and/or air conditioning installation, **characterized in that** it comprises a control module (30) for controlling at least one equipment item (2, 3; 4; 5, 6; 13) of the installation and a device (20) for detecting a risk that there will be misting on a window (PB) of the vehicle, according to one of the preceding claims, the said control module (30) being designed to collaborate with the said detection module (20).

11. Installation according to Claim 10, **characterized in that** it comprises a device (2, 3) for ventilating the window, and **in that** the control module (30) is designed to collaborate with the detection device (20) with a view to delivering an instruction to ventilate the window when the estimated comparison (Tv-Tr, Tv/Tr) between the temperature of the window and the dew point is below a first threshold value.

12. Installation according to Claim 11, **characterized in that** it comprises a cabin air conditioning device (4) and **in that** the control module (30) is designed to collaborate with the detection device (20) for the purposes of delivering an instruction to air condition the cabin when the estimated comparison (Tv-Tr, Tv/Tr) between the temperature of the window and the dew point is below a second threshold value.

13. Installation according to one of Claims 11 and 12, **characterized in that** it comprises a device (5, 6) for heating the air blown onto the window (PB), and **in that** the control module (30) is designed to collaborate with the detection device (20) for the purposes of delivering an instruction to heat the air blown onto the window when the estimated comparison (Tv-Tr, Tv/Tr) between the temperature of the window and the dew point is below a third threshold value.

14. Installation according to one of Claims 11 to 13, **characterized in that** it comprises a device (13) for recirculating the air in the cabin, and **in that** the control module is designed to collaborate with the detection device for the purposes of delivering an instruction to admit external air into the cabin when the estimated comparison between the temperature of the window and the dew point is below a fourth threshold value.

15. Installation according to one of Claims 10 to 14, **characterized in that** it comprises an air conditioning loop comprising an evaporator (4) and a temperature sensor (12) positioned near the evaporator and downstream of the latter (4) in the direction of travel of an air flow (F) intended to be blown into the cabin, and **in that** the said sensor is capable of being connected to the second input (Tf) of the detection device (20).

**Patentansprüche**

1. Vorrichtung zur Erfassung einer Gefahr des Vorhandenseins von Beschlag auf einer Kraftfahrzeugscheibe, wobei die Scheibe (PB) zwischen der Außenumgebung und dem Fahrzeuginnenraum (HAB) angeordnet ist, die aufweist:

   - mindestens einen ersten und einen zweiten Eingang, um mindestens eine erste und eine zweite Information zu empfangen, die sich auf eine Temperatur der Scheibe (Tv) bzw. auf eine Taupunkttemperatur (Tr) im Fahrzeuginnenraum beziehen,
   - ein Rechenmodul (21, 22, 23, 24), das geeignet ist, um:

     a) eine Temperatur der Scheibe (Tv) ausgehend von mindestens der ersten Information zu schätzen,
     b) eine Taupunkttemperatur (Tr) im Fahrzeuginnenraum (HAB) ausgehend von mindestens der zweiten Information zu schätzen, und
     c) einen Vergleich (Tv- Tr, Tv/Tr) zwischen der Temperatur der Scheibe und der Taupunkttemperatur zu schätzen, um daraus eine Gefahr des Vorhandenseins von Beschlag auf der Scheibe abzuleiten,

   - sowie einen Ausgang, der geeignet ist, um mit einem Steuermodul (30) einer Belüftungs-, Heiz- und/oder Klimaanlage des Fahrzeuginnenraums verbunden zu werden, um einen Sollwert bezüglich einer Gefahr (R) des Vorhandenseins von Beschlag zu liefern,

   **dadurch gekennzeichnet, dass** der zweite Eingang geeignet ist, um mit einem Temperaturfühler (12) einer Kaltluftquelle (4) der Anlage verbunden zu werden, und dass das Rechenmodul (21, 22) eingerichtet ist, um die Taupunkttemperatur des Innenraums ausgehend von einer Information zu bewerten, die für die Temperatur (Tf) der Kaltluftquelle repräsentativ ist, während die Luft des Innenraums anfangs als feuchtigkeitsgesättigt angesehen wird.

2. Vorrichtung nach Anspruch 1, **dadurch gekennzeichnet, dass** sie außerdem einen Speicher (MEM) aufweist, der eingerichtet ist, um Taupunkttemperaturwerte (Tr) zu speichern, die gemäß einem Mollier-Diagramm vorbestimmten Feuchtigkeitswerten (H) zugeordnet sind, und dass das Rechenmodul (21, 22) eingerichtet ist, um mit dem Speicher (MEM) zusammenzuwirken, um die Taupunkttemperatur auf der Basis einer Luftfeuchtigkeitsbilanz zu schätzen.

3. Vorrichtung nach einem der Ansprüche 1 und 2, **dadurch gekennzeichnet, dass** sie außerdem einen Speicher (MEM) aufweist, der eingerichtet ist, um Rechenanweisungen zu speichern, die gemäß einer vorbestimmten Gleichung Taupunkttemperaturwerte (Tr) in Abhängigkeit von vorbestimmten Feuchtigkeitswerten (H) ergeben können, und dass das Rechenmodul (21, 22) eingerichtet ist, um mit dem Speicher (MEM) zusammenzuwirken, um die Taupunkttemperatur auf der Basis einer Luftfeuchtigkeitsbilanz zu schätzen.

4. Vorrichtung nach einem der Ansprüche 1 bis 3, **dadurch gekennzeichnet, dass** sie außerdem Eingänge aufweist, die geeignet sind, um Informationen bezüglich einer Temperatur im Innenraum (Tint) und eines Durchsatzes (qv) von ventilierter Luft im Innenraum zu empfangen, während die Luftfeuchtigkeitsbilanz außerdem die Temperatur des Innenraums und den Durchsatz berücksichtigt.

5. Vorrichtung nach Anspruch 4, **dadurch gekennzeichnet, dass** sie außerdem einen Eingang aufweist, der geeignet ist, um eine Information bezüglich einer Feuchtigkeit (N GAMMA) zu empfangen, die von Fahrgästen im Innenraum abgegeben wird, während die Luftfeuchtigkeitsbilanz außerdem die von den Fahrgästen abgegebene Feuchtigkeit berücksichtigt.

6. Vorrichtung nach einem der Ansprüche 2 bis 5, **dadurch gekennzeichnet, dass** der Speicher (MEM) einen vorbestimmten Datenwert bezüglich eines Luftvolumens (Vair) im Innenraum enthält.

7. Vorrichtung nach einem der Ansprüche 2 bis 6, **dadurch gekennzeichnet, dass** sie einen Eingang aufweist, der geeignet ist, um mit einem Stellglied zur Regelung der Stellung einer Klappe (13) zur Rezirkulation von Luft in den Innenraum verbunden zu werden, die die Anlage aufweist, während das Rechenmodul (21) eingerichtet ist, um in der Luftfeuchtigkeitsbilanz eine Feuchtigkeit von Außenluft, die in den Innenraum ventiliert wird, von einer Feuchtigkeit von in den Innenraum rezirkulierter Luft je nach der Stellung der Rezirkulationsklappe (13) zu unterscheiden.

8. Vorrichtung nach einem der vorhergehenden Ansprüche, **dadurch gekennzeichnet, dass** sie mehrere Eingänge aufweist, die geeignet sind, um Informationen bezüglich einer Temperatur (Tas) und einer Geschwindigkeit (Vas) ventilierter Luft, einer mittleren Temperatur (Tint) im Innenraum, der Geschwindigkeit des Fahrzeugs (Vext) und einer Außenlufttemperatur (Text) zu empfangen, und dass das Rechenmodul (23) eingerichtet ist, um die Temperatur der Scheibe (Tv) ausgehend von der Temperatur und der Geschwindigkeit der auf die Scheibe ventilierten Luft, der mittleren Temperatur im Innenraum, der Geschwindigkeit des Fahrzeugs und der Außenlufttemperatur zu schätzen.

9. Vorrichtung nach Anspruch 8, **dadurch gekennzeichnet, dass** sie außerdem einen Eingang (PHI S) aufweist, der geeignet ist, um mit einem Solarstrahlungsfluss-Sensor verbunden zu werden, und dass das Rechenmodul eingerichtet ist, um die Temperatur der Scheibe unter Berücksichtigung einer Sonnenbestrahlung der Scheibe zu schätzen.

10. Belüftungs-, Heiz- und/oder Klimaanlage des Innenraums eines Kraftfahrzeugs, **dadurch gekennzeichnet, dass** sie ein Steuermodul (30) mindestens einer Einrichtung (2, 3; 4; 5, 6; 13) der Anlage und eine Vorrichtung (20) zur Erfassung einer Gefahr des Vorhandenseins von Beschlag auf einer Scheibe (PB) des Fahrzeugs nach einem der vorhergehenden Ansprüche aufweist, wobei das Steuermodul (30) eingerichtet ist, um mit dem Erfassungsmodul (20) zusammenzuwirken.

11. Anlage nach Anspruch 10, **dadurch gekennzeichnet, dass** sie eine Vorrichtung (2, 3) zur Belüftung der Scheibe aufweist, und dass das Steuermodul (30) eingerichtet ist, um mit der Erfassungsvorrichtung (20) zusammenzuwirken, um einen Belüftungssollwert der Scheibe zu liefern, wenn der geschätzte Vergleich (Tv-Tr, Tv/Tr) zwischen der Temperatur der Scheibe und der Taupunkttemperatur unter einem ersten Schwellwert liegt.

12. Anlage nach Anspruch 11, **dadurch gekennzeichnet, dass** sie eine Vorrichtung (4) zur Klimatisierung des Innenraums aufweist, und dass das Steuermodul (30) eingerichtet ist, um mit der Erfassungsvorrichtung (20) zusammenzuwirken, um einen Klimatisierungssollwert des Innenraums zu liefern, wenn der geschätzte Vergleich (Tv-Tr, Tv/Tr) zwischen der Temperatur der Scheibe und der Taupunkttemperatur unter einem zweiten Schwellwert liegt.

13. Anlage nach einem der Ansprüche 11 und 12, **dadurch gekennzeichnet, dass** sie eine Vorrichtung (5, 6) zum Heizen der auf die Scheibe (PB) ventilierten Luft aufweist, und dass das Steuermodul (30) eingerichtet ist, um mit der Erfassungsvorrichtung (20) zusammenzuwirken, um einen Heizsollwert der auf die Scheibe ventilierten Luft zu liefern, wenn der geschätzte Vergleich (Tv-Tr, Tv/Tr) zwischen der Temperatur der Scheibe und der Taupunkttemperatur unter einem dritten Schwellwert liegt.

14. Anlage nach einem der Ansprüche 11 bis 13, **dadurch gekennzeichnet, dass** sie eine Vorrichtung zur Rezirkulation von Luft in den Innenraum (13) aufweist, und dass das Steuermodul eingerichtet ist, um mit der Erfassungsvorrichtung zusammenzuarbeiten, um einen Sollwert der Zufuhr von Außenluft in den Innenraum zu liefern, wenn der geschätzte Vergleich zwischen der Temperatur der Scheibe und der Taupunkttemperatur unter einem vierten Schwellwert liegt.

15. Anlage nach einem der Ansprüche 10 bis 14, **dadurch gekennzeichnet, dass** sie eine Klimatisierungsschleife aufweist, die einen Verdunster (4) sowie einen Temperaturfühler (12) enthält, der in der Nähe des Verdunsters und hinter diesem (4) in Richtung der Bahn eines Luftstroms (F) angeordnet ist, der in den Innenraum ventiliert werden soll, und dass der Fühler geeignet ist, um mit dem zweiten Eingang (Tf) der Erfassungsvorrichtung (20) verbunden zu werden.

FIG.1

FIG.2

FIG.3

FIG.4

Text, Vext

AE

AI
Tint

AS
Tas, Vas

PB

## FIG.5

Ha
(g d'eau/kg d'air sec)

CS

Tr

R

Tv

20

10

0

0   3   5      10        20      25

Température (°C)

## FIG.6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0718165 A
- JP 61110613 B

- FR 9806831